# EUROPÄISCHE PATENTANMELDUNG

(11) **EP 3 109 419 A1**
(43) Veröffentlichungstag der Anmeldung: **28.12.2016**
(21) Anmeldenummer: 15173772.3
(22) Anmeldetag: 25.06.2015
(51) Int. Cl.: F01K 13/02, F01D 21/00, F01D 25/12

(54) **VERFAHREN ZUM ABKÜHLEN EINER STRÖMUNGSMASCHINE**

(71) Anmelder: Siemens Aktiengesellschaft, 80333 München (DE)
(72) Erfinder: Borowski, Marc, 47445 Moers (DE); Stawarski, Oliver, 41462 Neuss (DE)

(57) **Zusammenfassung**

Die Erfindung betrifft ein Verfahren zur Schnellabkühlung einer Dampfturbine (2), wobei über eine Evakuierungseinheit (23) Umgebungsluft durch das Ventil in die Dampfturbine (2) beströmt wird und dadurch eine Abkühlung erfolgt, wobei die Abkühlrate mittels eines Automatisierungssystems, umfassend einen Regler, geregelt wird.

## Beschreibung

Die Erfindung betrifft ein Verfahren zum Abkühlen einer Strömungsmaschine, wobei die Strömungsmaschine einen Einlass und einen Auslass aufweist, wobei der Auslass mit einer Evakuierungseinheit strömungstechnisch verbunden wird, wobei der Einlass mit einer Lufteinrichtung zum Zuführen von Kühlmittel strömungstechnisch verbunden wird, wobei die Evakuierungseinheit derart ausgebildet wird, dass das Kühlmittel mit einer Kühlmitteldurchflussmenge durch die Strömungsmaschine strömt.

Des Weiteren betrifft die Erfindung ein Automatisierungssystem zur Durchführung eines Verfahrens.

Strömungsmaschinen, wie z.B. Dampfturbinen sind hohen thermischen Beanspruchungen ausgesetzt. Dampfturbinen werden in der Regel über einen Einlass mit einem Dampf mit vergleichsweise hoher thermischer Energie beströmt. Im Dauerbetrieb weisen die Temperaturen der Dampfturbinenbauteile wie z.B. das Gehäuse eine hohe und konstante Temperatur auf. Generell muss beim Betrieb von Strömungsmaschinen darauf geachtet werden, dass die Temperaturänderung pro Zeit gewisse Grenzwerte nicht überschreitet, damit die Bauteil-Lebensdauer nicht übermäßig reduziert wird. Zu Revisionszwecken ist es erforderlich, dass die Dampfturbinen vollständig abgekühlt sind. Dampfturbinen sind nach dem Abstellen allerdings immer noch auf Betriebstemperatur und kühlen aufgrund der Wärmedämmung vergleichsweise langsam aus. Eine Möglichkeit das Auskühlen zu beschleunigen, besteht darin, die Dampfturbine nach einer Beendigung des Leistungsbetriebes mit Umgebungsluft zu durchströmen, wobei mit einer Evakuierungseinheit ein Unterdruck im Turbinenkondensator erzeugt wird, der zu einer erzwungenen Strömung der Umgebungsluft durch die Dampfturbine führt. Die Strömung der Umgebungsluft durch die Dampfturbine erfolgt mit einer bestimmten Durchflussmenge, wobei darauf zu achten ist, dass die Durchflussmenge derart gewählt wird, dass zulässige Abkühlraten nicht überschritten werden. Dazu wird die Durchflussmenge durch manuelles Verstellen von Absperrarmaturen der zulässigen Abkühlrate angepasst. Dies erfolgt während des gesamten Abkühlzeitraums. Nachteilig ist hierbei, dass eine durchgehende Besetzung der Warte erforderlich ist. Außerdem muss das Bedienpersonal darüber hinaus überwachen, dass während des Abkühlens keine anormalen Betriebszustände eintreten.

Vom Bedienpersonal wird die Bauteiltemperatur auf einem Bedien- und Beobachtungssystem zyklisch abgelesen. Die Bauteiltemperaturen werden mit vorher bestimmten Daten verglichen und die Absperrarmaturen, die die Durchflussmenge der Umgebungsluft regeln, entsprechend verstellt. Dies kann entweder vor Ort durch eine manuelle Bedienung oder über das Bedien- und Beobachtungssystem erfolgen. Ist die Abkühlrate langsamer als zulässig, werden die Absperrarmaturen etwas weiter geöffnet. Ist die Abkühlrate schneller als zulässig, werden die Absperrarmaturen etwas weiter geschlossen.

Diese Vorgehensweise ist zeitintensiv. Die Erfindung versucht hier Abhilfe zu schaffen.

Gelöst wird dies durch ein Verfahren zum Abkühlen einer Strömungsmaschine, wobei die Strömungsmaschine einen Einlass und einen Auslass aufweist, wobei der Auslass mit einer Evakuierungseinheit strömungstechnisch verbunden wird, wobei der Einlass mit einer Lufteinrichtung zum Zuführen von Kühlmittel strömungstechnisch verbunden wird. Wobei die Evakuierungseinheit derart ausgebildet wird, dass das Kühlmittel mit einer Kühlmitteldurchflussmenge durch die Strömungsmaschine strömt, wobei zulässige Abkühlraten der Strömungsmaschine ermittelt werden, wobei tatsächliche Abkühlraten der Strömungsmaschine erfasst werden, wobei mit einem Automatisierungssystem die zulässige Abkühlrate und die tatsächliche Abkühlrate verglichen werden und die Kühlmitteldurchflussmenge mit dem Automatisierungsmittel geregelt wird.

Die Aufgabe wird ebenfalls durch ein Automatisierungssystem zur Durchführung des Verfahrens gelöst.

Die Erfindung geht somit von dem Ansatz aus, eine Automatisierung einzusetzen, damit das Betriebspersonal von sich wiederholenden Tätigkeiten entlastet wird. Dazu wird ein Automatisierungssystem berücksichtigt, mit dem die Stellung der Absperrarmaturen, mit denen die Kühlmitteldurchflussmenge geregelt werden kann, über einen elektronischen Regler erfolgt, der Teil der Dampfturbinenleittechnik ist. Das Automatisierungssystem erfasst somit die aktuelle tatsächliche Abkühlrate und vergleicht diesen mit einem eingestellten zulässigen Wert. Ein Regler, insbesondere ein Stellungsregler positioniert anschließend die Absperrarmatur, um die Kühlmitteldurchflussmenge zu regeln.

Sofern eine Überschreitung der zulässigen Abkühlrate erfolgt, die z.B. durch eine Störung im Regelkreis entsteht, wird das Betriebspersonal durch einen Alarm auf diesen Zustand aufmerksam gemacht.

Mit der Erfindung ist es nun möglich, die Abkühlung einer Strömungsmaschine immer mit der optimalen Rate zu regeln. Das bedeutet, dass ein Zeitverlust durch eine zu geringe Absperrarmaturöffnung vermieden wird, als auch eine Überschreitung zulässiger Grenzen durch eine zu weite Ventilöffnung.

Vorteilhafte Weiterbildungen sind in den Unteransprüchen angegeben.

So ist die Strömungsmaschine in einer ersten vorteilhaften Weiterbildung als Dampfturbine ausgebildet.

Weitere Beispiele für eine Strömungsmaschine sind Verdichter oder Gasturbinen.

In einer vorteilhaften Weiterbildung weist die Dampfturbine eine Hochdruck-Teilturbine, eine Mitteldruck-Teilturbine und/oder Niederdruck-Teilturbine auf. Die Hochdruck-Teilturbine ist hierbei für die Frischdampftemperaturen ausgebildet. Die Frischdampftemperatur des Frischdampfes ist die Temperatur, die der Dampf am Ausgang des Dampferzeugers aufweist, der über eine Frischdampfleitung zur Hochdruck-Teilturbine strömt. Nach der Hochdruck-Teilturbine strömt der Dampf zu einer Zwischenüberhitzereinheit, wo er dort wieder auf eine höhere Temperatur erhitzt wird und anschließend in die Mitteldruck-Teilturbine strömt. Nach Durchströmung der Mitteldruck-Teilturbine strömt der Dampf über eine Überströmleitung unmittelbar zu einer Niederdruck-Teilturbine und von dort zu einem Kondensator.

Das Verfahren zur Abkühlung der Dampfturbine kann auf die Hochdruck-Teilturbine, Mitteldruck-Teilturbine und Niederdruck-Teilturbine insgesamt eingesetzt werden. Es ist auch möglich, das Verfahren zur Abkühlung nur auf eine Hochdruck-Teilturbine, nur auf eine Mitteldruck-Teilturbine oder nur auf eine Niederdruck-Teilturbine einzusetzen.

Der Einlass der Strömungsmaschine ist mit einer Armatur ausgebildet, wobei die Armatur die Kühlmitteldurchflussmenge regelt.

In einer vorteilhaften Weiterbildung ist die Armatur als Dampfventil im Einlass ausgebildet.

Vorteilhafterweise wird als Kühlmittel Umgebungsluft verwendet.

In einer vorteilhaften Weiterbildung wird die zulässige Abkühlrate durch eine Finite-Elemente-Methode berechnet, empirisch ermittelt oder durch Tests ermittelt.

Die tatsächliche Abkühlrate wird vorteilhafterweise aus Vergleichsdaten ermittelt, gemessen oder per Prognose ermittelt. Ausführungsbeispiele der Erfindung werden nachfolgend anhand der Zeichnungen beschrieben. Diese sollen die Ausführungsbeispiele nicht maßgeblich darstellen, vielmehr sind die Zeichnungen nur zur Erläuterung dienlich und in schematisierter und/oder leicht verzerrter Form ausgeführt. Im Hinblick auf Ergänzungen der in der Zeichnung unerkennbaren Lehren, wird auf den einschlägigen Stand der Technik verwiesen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:
- Figur 1: eine schematische Darstellung einer Dampfturbinenanlage;
- Figur 2: eine schematische Darstellung der Regelung.

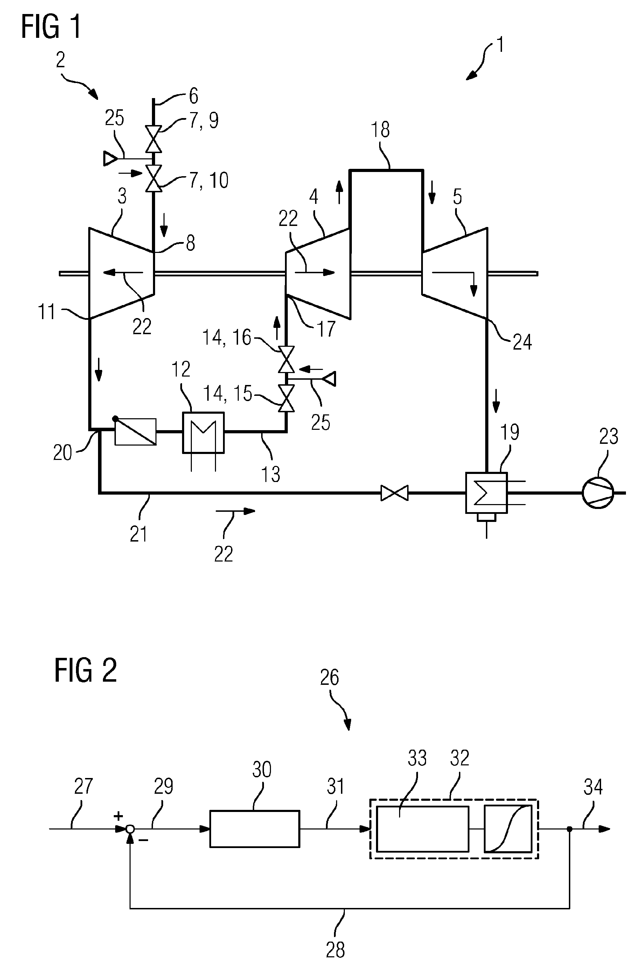

Figur 1 zeigt eine schematische Darstellung einer Kraftwerksanlage 1 umfassend eine als Dampfturbine 2 ausgebildete Strömungsmaschine, wobei die Dampfturbine eine Hochdruck-Teilturbine 3, eine Mitteldruck Teilturbine 4 und eine Niederdruck-Teilturbine 5 umfasst. Ein Frischdampf strömt aus einem nicht näher dargestellten Dampferzeuger über eine Frischdampfleitung 6 über eine Absperrarmatur 7 in einen Einlass 8 der Hochdruck-Teilturbine 3. Die Absperrarmatur 7 ist im Ausführungsbeispiel als ein Stellventil 9 und ein Schnellschussventil 10 ausgebildet. In alternativen Ausführungsformen kann das Stellventil 9 und das Schnellschlussventil 10 auch anders herum angeordnet sein.

In der Hochdruck-Teilturbine 3 entspannt sich der Frischdampf, der eine hohe thermische Energie aufweist. Diese hohe thermische Energie wird in Rotationsenergie eines nicht näher dargestellten Rotors umgewandelt. Dabei kühlt der Frischdampf auf eine niedrigere Temperatur, wobei sich ein niedrigerer Druck einstellt und strömt über einen Auslass 11 zu einem Zwischenüberhitzer 12, wobei im Zwischenüberhitzer 12 der Dampf wieder auf eine höhere Temperatur erhitzt wird. Der so erhitzte Dampf wird über eine heiße Zwischenüberhitzerleitung 13 über eine Mitteldruck-Absperrarmatur 14 zur Mitteldruck-Teilturbine 4 geführt. Die Mitteldruck-Absperrarmatur 14 ist als ein Mitteldruck-Stellventil 15 und ein Mitteldruck-Schnellschlussventil 16 ausgebildet. Der Dampf strömt über einen Mitteldruck-Einlass 17 zur Mitteldruck-Teilturbine 4. Der Dampf aus der Mitteldruck-Teilturbine 4 strömt über eine Überströmleitung 18 zu einem Einlass der Niederdruck-Teilturbine 5 zum Kondensator 19. Im Kondensator 19 kondensiert der Dampf zu Wasser und wird über eine nicht näher dargestellte Leitung wieder zum Dampferzeuger geführt.

Die Kraftwerksanlage 1 umfasst ferner eine Abzweigung 20. An dieser Abzweigung 20 ist eine Bypassleitung 21 angeordnet, die eine strömungstechnische Verbindung zwischen dem Auslass 11 der Hochdruck-Teilturbine 3 und dem Kondensator 19 herstellt.

Die Kraftwerksanlage 1 ist ferner mit einer Evakuierungseinheit 23 ausgebildet, wobei die Evakuierungseinheit 23 mit dem Auslass 11 und einem Auslass 24 der Niederdruck-Teilturbine 5 strömungstechnisch verbunden ist. Die Evakuierungseinheit 23 ist derart ausgebildet, dass ein Unterdruck im Kondensator 19 herrscht, so dass ein in der Dampfturbine 2 befindliches Kühlmittel in Pfeilrichtung 22 zum Kondensator 19 gelangt. Das Kühlmittel, insbesondere Umgebungsluft, gelangt über eine Kühlmittelleitung 25 in die Absperrarmatur 7 bzw. Mitteldruck-Absperrarmatur 14 und führt somit zu einer Zwangsabkühlung mittels Umgebungsluft über die Kühlmittelleitung 25 und den Absperrarmaturen 7 und 14 und dem Einlass 8 sowie 17 durch die Hochdruck-Teilturbine 3 und Mitteldruck-Teilturbine 4.

Die Evakuierungseinrichtung 23 ist derart ausgebildet, dass das Kühlmittel mit einer Kühlmitteldurchflussmenge durch die Dampfturbine 2 strömt.

Die Kraftwerksanlage 1 ist ferner mit einem Automatisierungssystem (nicht dargestellt) ausgebildet, das zunächst zulässige Abkühlraten der Dampfturbine 2 ermittelt. Die zulässigen Abkühlraten können durch eine Finite-Elemente-Methode berechnet, empirisch ermittelt oder durch Tests ermittelt werden. Ferner wird mit dem Automatisierungssystem die tatsächliche Abkühlrate der Dampfturbine 2 erfasst. Dies erfolgt durch eine Messung, aus einer Mittelung mit Vergleichsdaten oder per Prognose.

In einem nächsten Schritt vergleicht das Automatisierungssystem die zulässige Abkühlrate mit der tatsächlichen Abkühlrate und regelt die Kühlmitteldurchflussmenge durch die Kühlmittelleitung 25.

Diese Regelung kann durch die Hubeinstellung in der Absperrarmatur 7 als auch mit der Mitteldruck-Absperrarmatur 14 erfolgen. Ist die Abkühlrate langsamer als zulässig, wird die Absperrarmatur 7, 14 etwas weiter geöffnet. Ist die Abkühlrate schneller als zulässig, wird die Absperrarmatur 7, 14 etwas weiter geschlossen.

Zur Überwachung abnormaler Betriebszustände, z.B. einem Kontakt von rotierenden mit nicht rotierenden Teilen, muss die Drehzahl des Turbinenläufers permanent überwacht werden.

Im Falle einer Überschreitung der zulässigen Abkühlrate, z.B. bei einer Störung des Regelkreises wird das Betriebspersonal durch einen Alarm auf diesen Zustand aufmerksam gemacht.

Das Automatisierungssystem wird mit einem Regler ausgebildet, der in der Figur 2 dargestellt ist.

Der Regler 26 gemäß Figur 2 weist einen Sollwerteingang auf, der durch die Soll-Abkühlrate (K/h) gebildet ist. Zu dem Sollwert 27 wird ein Istwert 28, der durch die tatsächliche Abkühlrate (K/h) gebildet ist, subtrahiert. Die Differenz des Sollwerteingangs 27 und des Istwertes 28 wird als Regelabweichung 29 einem Regler, der als Abkühlregler bezeichnet werden kann, zugeführt. Der Regler 30 kann als P, PI oder PID-Regler ausgebildet sein. Der Ausgang des Reglers 31 geht als Stellgröße, der als Stellungssollwert bezeichnet wird, zu einer Regelstrecke 32. Die Regelstrecke 32 wird gebildet durch einen Stellungsregler der Turbinenventile 33. Der Ausgang der Regelung wird als Regelgröße 34 bezeichnet und ist durch die Abkühlrate gebildet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Abkühlen einer Strömungsmaschine,
wobei die Strömungsmaschine einen Einlass (8, 17) und/oder einen Auslass (11) aufweist,
wobei der Auslass (11) mit einer Evakuierungseinheit (23) strömungstechnisch verbunden wird,
wobei der Einlass (8, 17) mit einer Lufteinrichtung zum Zuführen von Kühlmittel strömungstechnisch verbunden wird, wobei die Evakuierungseinheit (23) derart ausgebildet wird, dass das Kühlmittel mit einer Kühlmitteldurchflussmenge durch die Strömungsmachine strömt,
wobei zulässige Abkühlraten der Strömungsmaschine ermittelt werden,
wobei die tatsächliche Abkühlrate der Strömungsmaschine erfasst wird,
wobei mit einem Automatisierungssystem die zulässige Abkühlrate und die tatsächliche Abkühlrate verglichen werden und die Kühlmitteldurchflussmenge mit dem Automatisierungssystem geregelt wird.

2. Verfahren nach Anspruch 1,
wobei die Strömungsmaschine als Dampfturbine (2) ausgebildet wird.

3. Verfahren nach Anspruch 2,
wobei die Dampfturbine (2) eine Hochdruck-Teilturbine (3), eine Mitteldruck-Teilturbine (4) und/oder Niederdruck-Teilturbine (5) aufweist.

4. Verfahren nach Anspruch 1, 2 oder 3,
wobei die Kühlmitteldurchflussmenge durch die Lufteinrichtung mit einer Armatur (7, 14, 15, 16) geregelt wird.

5. Verfahren nach Anspruch 4,
wobei die Armatur (7, 14, 15, 16) als Dampfventil im Einlass ausgebildet wird.

6. Verfahren nach einem der vorhergehenden Ansprüche,
wobei als Kühlmittel Umgebungsluft verwendet wird.

7. Verfahren nach einem der vorhergehenden Ansprüche,
wobei die zulässige Abkühlrate durch eine Finite-Elemente-Methode berechnet wird oder empirisch ermittelt wird oder durch Test ermittelt wird.

8. Verfahren nach einem der vorhergehenden Ansprüche,
wobei die tatsächlichen Abkühlraten gemessen werden, aus Vergleichsdaten ermittelt werden oder per Prognose ermittelt werden.

9. Verfahren nach einem der vorhergehenden Ansprüche,
wobei das Automatisierungssystem mit einem Regler ausgebildet wird,
wobei als Sollwert eine Soll-Abkühlrate (K/h) verwendet wird,
wobei gilt: Soll-Abkühlrate ≤ zulässige Abkühlrate, wobei als Istwert die tatsächliche Abkühlrate verwendet wird.

10. Verfahren nach Anspruch 9,
wobei als Stellgröße die Kühlmitteldurchflussmenge verwendet wird.

11. Verfahren nach Anspruch 9,
wobei als Stellgröße die Ventilstellung des Dampfventils verwendet wird.

12. Verfahren nach einem der Ansprüche 9 bis 11,
wobei als Regler ein P, PI oder PID-Regler verwendet wird.

13. Verfahren nach einem der vorhergehenden Ansprüche,
wobei ein Alarm losgeht, wenn die zulässige Abkühlrate über- oder unterschritten wird.

14. Automatisierungssystem zur Durchführung eines Verfahrens gemäß einem der Ansprüche 1 bis 13.
